# EUROPÄISCHE PATENTSCHRIFT

(11) **EP 2 193 945 B1**
(45) Veröffentlichungstag und Bekanntmachung des Hinweises auf die Patenterteilung: **21.08.2013**
(21) Anmeldenummer: 09014438.7
(22) Anmeldetag: 19.11.2009
(51) Int. Cl.: B60J 7/22, B60R 7/00

(54) **Windschutz für ein Fahrzeug mit Falt- oder Klappverdeck**
Windbreaker for a vehicle with a folding or retractable roof
Pare-vent pour un véhicule doté d'une capote pliante ou rabattable

(30) Priorität: 06.12.2008 DE 102008060953
(43) Veröffentlichungstag der Anmeldung: 09.06.2010
(73) Patentinhaber: Bayerische Motoren Werke Aktiengesellschaft, 80809 München (DE)
(72) Erfinder: Henze, Lars, Dr., 80935 München (DE)

(56) Entgegenhaltungen:
- EP-A1- 0 970 835
- EP-A1- 1 258 398
- EP-A1- 1 671 830
- DE-A1- 3 725 490
- DE-A1- 10 007 137
- DE-A1- 19 629 457
- DE-C1- 10 215 836
- DE-U1-202006 015 662
- KR-B1- 100 803 311
- US-A1- 2003 085 585
- US-B1- 6 345 944

## Beschreibung

Die Erfindung betrifft einen Windschutz für ein Fahrzeug mit Falt- oder Klappverdeck, mit den im Oberbegriff des Patentanspruches 1 angegebenen Merkmalen.

Ein derartiger Windschutz weist in der EP 1 671 830 A1 ein in einer Windschutzlage hinter den Rückenlehnen der Vordersitze eines Fahrzeugs mit Falt- oder Klappverdeck etwa horizontal angeordnetes Windschutzteil mit einem Rahmen auf, an dem ein faltbares Material, vorzugsweise ein Gewebe befestigt ist. Das Gewebe weist einen Flächenbereich auf, der an einem Umfangsbereich mit einem Gewebebereich fest und in einem anderen Umfangsbereich über einen Reißverschluss oder Klettverschluss lösbar mit einem anderen Gewebebereich verbunden ist. Ist der Reißverschluss vollständig oder teilweise geöffnet, ist in dem Gewebe ein Spalt gebildet, durch den hindurch wenigstens ein Gepäckstück auf den Sitzteilen der Rücksitze abzulegen und während der Fahrt mitzuführen ist. Das so im Fahrzeug mitgeführte Gepäckstück dürfte noch über eine Halte- oder Sicherungseinrichtung so zu fixieren sein, dass der Gegenstand bei einem Unfall oder starken Verzögerungen des Fahrzeugs keine Bewegungen ausführen kann, die zu Verletzungen der Fahrgäste im Fahrzeug oder anderer Verkehrsteilnehmer führen könnten.

Der Erfindung liegt die Aufgabe zu Grunde, einen Windschutz mit den Merkmalen im Oberbegriff des Patentanspruches 1 anzugeben, der ohne aufwändige Maßnahmen zumindest bei geöffnetem Falt- oder Klappverdeck ein sicheres Mitführen von zumindest kleineren Gegenständen im Fahrzeug ermöglicht.

Diese Aufgabe ist durch die im Patentanspruch 1 angegebenen Merkmale gelöst. Vorteilhafte Ausgestaltungen der Erfindung sind den Unteransprüchen entnehmbar.

Der erfindungsgemäße Windschutz für ein Fahrzeug mit Falt- oder Klappverdeck weist ein etwa horizontal über den Rücksitzen des Fahrzeugs anzuordnendes und an dem Fahrzeug abzustützendes Windschutzteil auf, das über wenigstens ein Verbindungselement mit einem zugeordneten Wandelement zu verbinden ist. Das Windschutzteil ist in einem Flächenbereich vollständig von dem Wandelement überdeckt, das zumindest an einem Umfangsbereich mit dem Windschutzteil lösbar zu verbinden ist, wobei das Windschutzteil zumindest in einem Bereich des Flächenbereiches und/oder das Wandelement zumindest bereichsweise elastisch ausgebildet ist bzw. sind. Dadurch ist nach dem Lösen oder Verlagern des Verbindungselements in den elastisch veränderlichen Raum zwischen dem Windschutzteil und dem Wandelement zumindest ein Gegenstand einzubringen. Anschließend kann das Wandelement wieder über das Verbindungselement mit dem Windschutzteil verbunden werden, wodurch der Gegenstand in dem Zwischenraum zwischen dem Flächenbereich des Windschutzteiles und dem Wandelement gefangen ist und bei einer entsprechenden Festigkeit des Flächenbereiches des Windschutzteiles und/oder des Wandelements keine bei einem Unfall oder starken Fahrzeugverzögerungen eventuell Verletzungen bewirkenden größeren Bewegungen ausführen kann. Ist beispielsweise der angegebene Flächenbereich des Windschutzteiles elastisch ausgebildet und das Wandelement nicht oder kaum elastisch nachgiebig, so wird ein in den Zwischenraum zwischen dem Flächenbereich des Windschutzteiles und des Wandelements eingebrachter Gegenstand im Wesentlichen den Flächenbereich des Windschutzteiles nach unten elastisch ausbeulen. Das obere Wandelement kann dann mit dem benachbarten Bereich des Windschutzteiles etwa bündig verlaufen, wodurch die Luftströmung an der Oberseite des Windschutzteiles nicht beeinflusst ist. Befindet sich das Wandelement beispielsweise hinter einer Rückenlehne eines Vordersitzes kann das Wandelement alternativ oder zusätzlich elastisch ausgebildet sein, da dann das Wandelement vom Fahrtwind nicht oder kaum umströmt ist. Bei einer zusätzlich elastischen Ausbildung des Wandelements kann in den Zwischenraum zwischen dem Flächenbereich des Windschutzteiles und des Wandelements ein größerer Gegenstand eingebracht werden. Mit dem Windschutzteil kann ein hinter oder zwischen den Rückenlehnen der Vordersitze in einer Windschutzlage etwa aufrecht angeordnetes Windschutzelement beispielsweise um eine Fahrzeugquerachse schwenkbar verbunden sein, das beispielsweise bei Nichtgebrauch zu dem Windschutzteil geschwenkt eine platzsparende Aufbewahrung des Windschutzes an einem beliebigen Ort ermöglicht.

Ein Ausführungsbeispiel der Erfindung wird anhand einer Zeichnung näher erläutert.
Es zeigen
- Fig. 1: eine vereinfachte perspektivische Ansicht auf einen Windschutz eines Fahrzeugs bei geöffnetem Falt- oder Klappverdeck, der in seiner Windschutzlage hinter den Vordersitzen angeordnet ist,
- Fig. 2: eine vergrößerte perspektivische Ansicht auf ein in Fig. 1 rechtes oder linkes Wandelement über dem Windschutzteil und
- Fig. 3: eine vergrößerte perspektivische Ansicht auf ein in Fig. 1 rechtes oder linkes Wandelement über dem Windschutzteil, das nach dem Öffnen eines zugeordneten Reißverschlusses bereichsweise nach vorne geklappt ist.

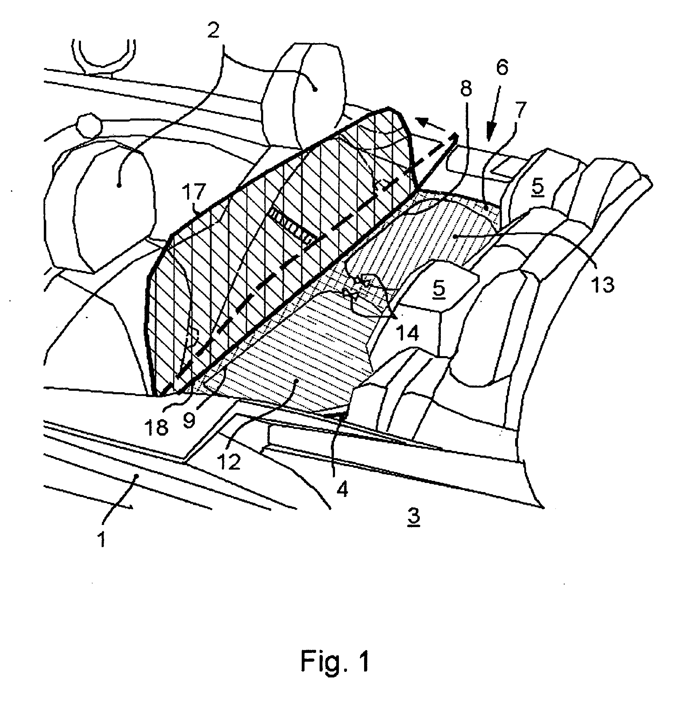

Der in Fig. 1 in einer vereinfachten perspektivischen Ansicht dargestellte Windschutz eines Fahrzeugs 1 mit einem Falt- oder Klappverdeck wurde nach dem Öffnen des Falt- oder Klappverdecks hinter den Vordersitzen 2 in seiner durch ausgezogene Umrisslinien dargestellten Windschutzlage angeordnet und über nicht dargestellte Fixierelemente gegenüber der Karosserie 3 des Fahrzeugs 1 fixiert.

Der Windschutz weist ein etwa horizontal über den Sitzteilen 4 der Rücksitze 5 des Fahrzeugs 1 angeordnetes Windschutzteil 6 mit einem an der Karosserie 3 des Fahrzeugs 1 abgestützten und fixierten Rahmen 7 auf, in dem zwei durchgehende Öffnungen 8, 9 gebildet sind, die mit einem seitlichen Abstand voneinander in Fahrzeugquerrichtung nebeneinander angeordnet sind. Bei dem Ausführungsbeispiel ist der Rahmen im Wesentlichen durch ein Kunststoffteil oder Kohlefaserteil oder ein Metallteil im Wesentlichen aus Aluminium oder Stahl oder ein Teil aus einem Verbundwerkstoff gebildet.

Die Öffnungen 8, 9 bilden Flächenbereiche des Windschutzteiles 6, die jeweils von einem elastischen Wandteil oder Netzteil 10, 11 überdeckt sind, das an dem Umfangsrand der zugeordneten Öffnung 8 bzw. 9 in dem Rahmen 7 direkt oder beispielsweise über eine Randleiste befestigt ist und eine Bodenwand bildet.

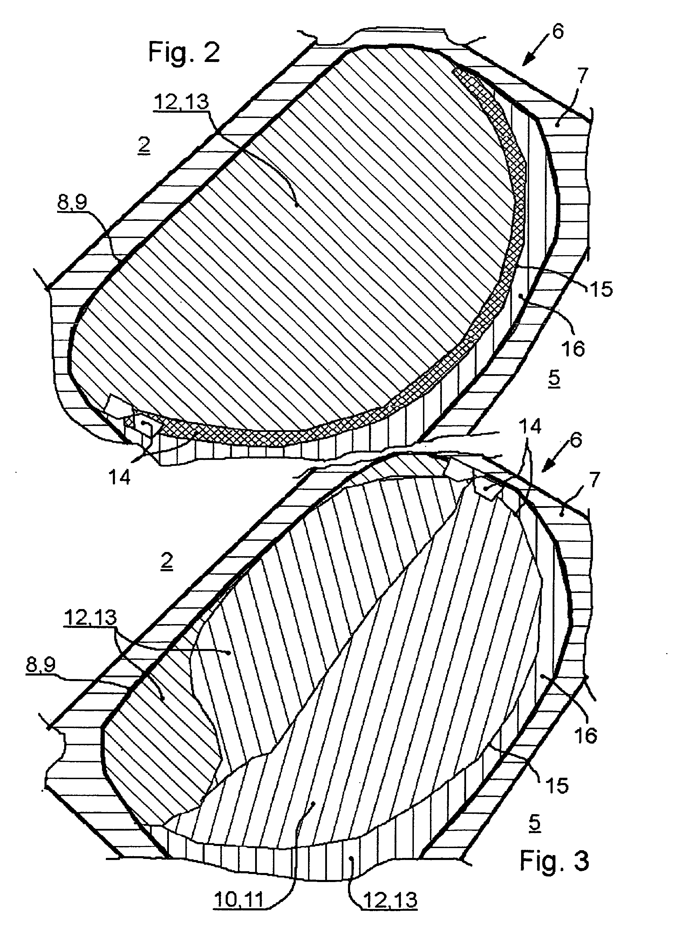

Außerdem sind die den Öffnungen 8, 9 entsprechenden Flächenbereiche des Windschutzteiles 6 jeweils vollständig von einem zugeordneten Wandelement 12, 13 überdeckt, das zumindest an einem Innenbereich 15 oder Umfangsbereich über einen Reißverschluss 14 oder Klettverschluss mit einem anderen Bereich 16 des Wandelements 12, 13 oder mit dem Windschutzteil 6 lösbar zu verbinden ist. Wie insbesondere den Figuren 2 und 3 zu entnehmen ist, verläuft der Reißverschluss 14 oder Klettverschluss in Längsrichtung des Fahrzeugs nach hinten konvex gekrümmt.

Bei dem Ausführungsbeispiel sind die Wandelemente 12, 13 jeweils durch ein elastisches Wand- oder Netzteil gebildet. Nach dem vollständigen oder lediglich teilweise durchgeführten Lösen oder Verlagern des betreffenden Verbindungselements, das bei dem Ausführungsbeispiel ein Reißverschluss 14 oder ein Klettverschluss ist, kann in den elastisch veränderlichen Raum zwischen dem Wand- oder Netzteil 10 bzw. 11 und dem jeweils zugeordneten Wandelement 12 bzw. 13 zumindest ein Gegenstand eingebracht werden, wobei sich das betreffende Wand- oder Netzteil 10 bzw. 11 und das zugeordnete Wandelement 12 bzw. 13 elastisch dehnen und an die Form des Gegenstandes anpassen können. Wird anschließend das betreffende Wandelement 12 bzw. 13 über das Verbindungselement, bzw. den Reißverschluss 14 oder Klettverschluss mit dem Windschutzteil bzw. mit dem anderen Bereich 16 des Wandelements 12 bzw. 13 verbunden, ist der Gegenstand in dem von dem Wand- oder Netzteil 10 bzw. 11 und dem Wandelement 12 bzw. 13 gebildeten Raum gefangen und kann im Fahrbetrieb keine größeren Bewegungen ausführen.

Fig. 1 ist entnehmbar, dass bei dem Ausführungsbeispiel zwei Wandelemente 12, 13 mit einem Seitenabstand voneinander etwa symmetrisch zur Fahrzeugmitte angeordnet sind und jeweils zusammen mit den in Fig. 3 dargestellten Wand- oder Netzteilen 10, 11 jeweils ein über einen Reißverschluss 14 oder Klettverschluss zugängliches und verschließbares Aufnahmefach für wenigstens einen Gegenstand bilden.

Der Windschutz weist auch ein hinter den Rückenlehnen der Vordersitze 2 in der dargestellten Windschutzlage etwa aufrecht angeordnetes Windschutzelement 17 auf, das mit dem etwa horizontal angeordneten Windschutzteil 16 um eine Schwenkachse 18 in Fahrzeugquerrichtung schwenkbar verbunden und in der Windschutzlage gegenüber dem Windschutzteil 16 und/oder der Karosserie 3 des Fahrzeugs 1 fixiert ist. Das Windschutzelement 17 kann zumindest bereichsweise ähnlich wie das Windschutzteil 16 gebildet sein und/oder beispielsweise hinter einem in der Windschutzlage etwa vertikalen Flächenbereich ein zumindest bereichsweise elastisches Wandelement aufweisen, das an zumindest einem Umfangsbereich des Wandelements mit einem Flächenbereich des Windschutzelements verbunden ist und an zumindest einem anderen Umfangsbereich des Wandelements über ein Verbindungsteil, beispielsweise einen Reißverschluss oder einen Klettverschluss mit dem Flächenbereich des Windschutzelements lösbar zu verbinden ist. Zumindest ein von dem zugeordneten Wandelement überdeckter Bereich des Windschutzelements und/oder des zugeordneten Wandelements kann bzw. können teilweise oder vollständig zumindest etwas elastisch nachgiebig ausgebildet sein.

Die Erfindung kann von dem Ausführungsbeispiel abweichend realisiert werden. Der Flächenbereich, an dem das Windschutzteil vollständig von dem Wandelement überdeckt ist, kann ein beliebiger Flächenbereich sein. Das Windschutzteil, bzw. bei einer mehrteiligen Ausbildung des Windschutzteiles ein Teil des Windschutzteiles kann zumindest in einem Bereich elastisch ausgebildet sein und dadurch einen Wandbereich eines elastisch veränderlichen Aufnahmefaches bilden, in den beispielsweise nach dem vollständigen oder teilweise durchgeführten Lösen eines Verbindungsteiles ein Gegenstand einzubringen ist. Das Verbindungsteil kann ein beliebiges, beispielsweise bekanntes Verbindungsteil sein. Bei dem Ausführungsbeispiel ist das Windschutzteil mehrteilig im Wesentlichen durch einen an der Karosserie des Fahrzeugs fixierbaren Rahmen und zwei Wand- oder Netzteile gebildet. Der Rahmen ist bei dem Ausführungsbeispiel ein Kunststoffteil und kann auch aus einem Material beispielweise mit Kohlefasern gebildet sein. Ebenso kann der Rahmen ein Metallteil im Wesentlichen aus Aluminium oder Stahl oder ein Teil aus einem Verbundwerkstoff sein. Der Rahmen kann auch durch ein steifes oder zumindest bereichsweise elastisches Flächengebilde ersetzt sein. Das Windschutzteil kann eine beliebige Anzahl von Bauteilen aufweisen, die aus beliebigen Materialien derart gebildet sein können, dass wenigstens ein Aufnahmefach zum Mitführen wenigstens eines Gegenstandes gebildet ist. Das bei dem Ausführungsbeispiel hinter den Rückenlehnen der Vordersitze in einer Windschutzlage etwa aufrecht angeordnete Windschutzelement kann auch vollständig oder teilweise zwischen den Rückenlehnen der Vordersitze angeordnet sein oder entfallen oder von dem etwa horizontalen Windschutzteil unabhängig angeordnet sein. Eine Abstützung und/oder Fixierung des Windschutzelements in der Windschutzlage kann auf beliebige Weise erfolgen.

## Patentansprüche

1. Windschutz für ein Fahrzeug (1) mit Falt- oder Klappverdeck, der ein etwa horizontal über Rücksitzen (5) angeordnetes und an dem Fahrzeug (1) abgestütztes Windschutzteil (6) aufweist, das über wenigstens ein Verbindungselement (14) mit einem zugeordneten Wandelement (12 bzw. 13) zu verbinden ist, und das Windschutzteil (6) in einem wenigstens eine Öffnung aufweisenden Flächenbereich vollständig von dem Wandelement (12 bzw. 13) überdeckt ist, das zumindest an einem Innenbereich (15) oder Umfangsbereich mit einem anderen Bereich (16) des Wandelements (12 bzw. 13) oder mit dem Windschutzteil lösbar zu verbinden ist, wobei das Windschutzteil (6) zumindest in einem Bereich des wenigstens eine Öffnung aufweisenden Flächenbereiches und/oder das Wandelement (12 bzw. 13) zumindest bereichsweise elastisch (10 bzw. 11) ausgebildet ist bzw. sind, wodurch nach dem Lösen oder Verlagern des Verbindungselements (14) in den elastisch veränderlichen Raum zwischen dem Windschutzteil (6) und dem Wandelement (12 bzw. 13) zumindest ein Gegenstand einzubringen und dann das Wandelement (12 bzw. 13) über das Verbindungselement (14) mit dem anderen Bereich (16) des Wandelements (12 bzw. 13) oder mit dem Windschutzteil zu verbinden ist, und das Windschutzteil (6) einen an der Karosserie (3) des Fahrzeugs (1) fixierbaren Rahmen (7) mit wenigstens einer Öffnung (8, 9) in dem wenigstens eine Öffnung aufweisenden Flächenbereich aufweist, die von einer Bodenwand überdeckt ist.

2. Windschutz nach Anspruch 1, **dadurch gekennzeichnet, dass** das Windschutzteil (6) und/oder das Wandelement (12 bzw. 13) zumindest bereichsweise von einem elastischen Wandteil oder Netzteil gebildet ist bzw. sind.

3. Windschutz nach Anspruch 1 oder 2, **dadurch gekennzeichnet, dass** das Verbindungselement (14) ein Reißverschluss oder Klettverschluss ist.

4. Windschutz nach einem der Ansprüche 1 bis 3, **dadurch gekennzeichnet, dass** die Bodenwand zumindest bereichsweise zumindest etwas elastisch nachgiebig ausgebildet ist.

5. Windschutz nach Anspruch 4, **dadurch gekennzeichnet, dass** der Rahmen (7) im Wesentlichen durch ein Kunststoffteil gebildet ist, das in der Windschutzlage des Windschutzes etwa horizontal angeordnet ist.

6. Windschutz nach einem der Ansprüche 1 bis 5, **dadurch gekennzeichnet, dass** das Wandelement (12, 13) flächenhaft oder netzartig ausgebildet und an einem Randbereich mit dem Windschutzteil (6) dauerhaft verbunden ist.

7. Windschutz nach einem der Ansprüche 3 bis 6, **dadurch gekennzeichnet, dass** der Reißverschluss (14) oder Klettverschluss in Längsrichtung des Fahrzeugs (1) nach hinten konvex gekrümmt verläuft.

8. Windschutz nach einem der Ansprüche 1 bis 7, **dadurch gekennzeichnet, dass** zwei Wandelemente (12, 13) mit einem Seitenabstand voneinander etwa symmetrisch zur Fahrzeugmitte angeordnet sind und jeweils zusammen mit einem Flächenbereich (10, 11) des Windschutzteiles (6) ein über den Reißverschluss (14) oder Klettverschluss zugängliches und verschließbares Aufnahmefach für wenigstens einen Gegenstand bilden.

9. Windschutz nach einem der Ansprüche 1 bis 8, **dadurch gekennzeichnet, dass** der Windschutz hinter oder zwischen den Rückenlehnen der Vordersitze (2) ein in einer Windschutzlage etwa aufrecht angeordnetes Windschutzelement (17) aufweist, das mit dem etwa horizontal angeordneten Windschutzteil (6) um eine Schwenkachse (18) in Fahrzeugquerrichtung schwenkbar verbunden und in der Windschutzlage gegenüber dem Windschutzteil (6) und/oder der Karosserie (3) des Fahrzeugs (1) fixiert ist.

10. Windschutz nach Anspruch 9, **dadurch gekennzeichnet, dass** das Windschutzelement (17) zumindest bereichsweise ähnlich wie das Windschutzteil (6) gebildet ist und/oder hinter einem in der Windschutzlage etwa vertikalen Flächenbereich ein zumindest bereichsweise elastisches Wandelement aufweist, das an zumindest einem Umfangsbereich des Wandelements mit einem Flächenbereich des Windschutzelements verbunden ist und an zumindest einem anderen Umfangsbereich des Wandelements über ein Verbindungsteil, beispielsweise einen Reißverschluss oder einen Klettverschluss mit dem Flächenbereich des Windschutzelements lösbar zu verbinden ist, und zumindest ein von dem zugeordneten Wandelement überdeckter Bereich des Windschutzelements und/oder des zugeordneten Wandelements zumindest etwas elastisch nachgiebig ausgebildet ist bzw. sind.

## Claims

1. A windbreak for a folding-top motor vehicle (1) comprising a windbreak part (6) disposed approximately horizontally over back seats (5) and braced against the vehicle (1) and connectable by at least one connecting element (14) to an associated wall element (12 or 13), and the windbreak part (6), over an area formed with at least one opening, is completely covered by the wall element (12 or 13) which, at least at an inner region (15) or peripheral region, is releasably connected to another region (16) of the wall element (12 or 13) or to the windbreak part, wherein the windbreak part (6), at least in a part of the region having at least one opening, and/or the wall element (12 or 13) is or are elastic at least in parts (10 or 11), with the result that after the connecting element (14) has been released or moved, at least one object can be inserted into the elastically variable space between the windbreak part (6) and the wall element (12 or 13), after which the wall element (12 or 13), via the connecting element (14), is connectable to the other region (16) of the wall element (12 or 13) or to the windbreak part, and the windbreak part (6) has a frame (7) fixable to the body (3) of the motor vehicle (1) and with at least one opening (8, 9) in the region having at least one opening, the opening being covered by a floor wall.

2. A windbreak according to claim 1, **characterised in that** the windbreak part (6) and/or the wall element (12 or 13) are at least partly in the form of an elastic wall part or netting part.

3. A windbreak according to claim 1 or claim 2, **characterised in that** the connecting element (14) is a zip fastener or a hook and loop fastener.

4. A windbreak according to any of claims 1 to 3, **characterised in that** the floor wall, at least in parts, is at least somewhat elastically flexible.

5. A windbreak according to claim 4, **characterised in that** the frame (7) is substantially in the form of a plastic part which is approximately horizontal when the windbreak is in the operative position.

6. A windbreak according to any of claims 1 to 5, **characterised in that** the wall element (12 or 13) is in the form of a sheet or netting and an edge region thereof is permanently connected to the windbreak part (6).

7. A windbreak according to any of claims 3 to 6, **characterised in that** the zip fastener (14) or hook and loop fastener has a convex curvature at the rear in the longitudinal direction of the vehicle (1).

8. A windbreak according to any of claims 1 to 7, **characterised in that** two laterally spaced-apart wall elements (12 or 13) are disposed approximately symmetrically relative to the middle of the vehicle and each, in co-operation with a surface region (10 or 11) of the windbreak part (6), form a compartment for holding at least one object and accessible and closable via the zip fastener (14) or the hook and loop fastener.

9. A windbreak according to any of claims 1 to 8, **characterised in that** behind or between the backs of the front seats (2), the windbreak comprises an element (17) disposed approximately vertically when in the operative position and connected to the approximately horizontal windbreak part (6) so as to be pivotable around an axis (18) in the transverse direction of the vehicle, and fixed relative to the windbreak part (6) and/or the body (3) of the motor vehicle (1) when in the operative position.

10. A windbreak according to claim 9, **characterised in that** the windbreak element (17), at least in parts, is constructed similarly to the windbreak part (6) and/or, behind a region which is approximately vertical in the operative position, has an at least partly elastic wall element which, at at least one peripheral region of the wall element, is connected to a region of the windbreak element and releasably connected to at least one other peripheral region of the wall element by a connecting part, e.g. a zip fastener or a hook and loop fastener, and at least one region of the associated wall element and/or of the windbreaker element covered by the associated wall element is or are at least somewhat elastically flexible.

## Revendications

1. Pare-vent de véhicule (1) équipé d'une capote pliante ou rabattable et qui est installé sensiblement horizontalement par dessus les sièges arrière (5) et comporte une partie de pare-vent (6) appuyée sur le véhicule (1) et reliée par au moins un élément de liaison (14) à un élément de paroi (12, 13) associé et au moins une zone de surface ayant une ouverture de la partie de pare-vent (6) est couverte complètement par l'élément de paroi (12, 13) relié de manière amovible au moins dans la zone intérieure (15) ou dans la zone périphérique à une autre zone (16) de l'élément de paroi (12, 13) ou avec la partie de pare-vent, par une liaison amovible,
- dans au moins une zone de surface munie d'une ouverture et/ou de l'élément de paroi (12, 13), la partie de pare-vent (6) étant au moins réalisée élastiquement par zone (10, 11) de façon qu'après desserrage ou déplacement de l'élément de liaison (14) on peut placer au moins un objet dans la zone élastiquement variable entre la partie de pare-vent (6) et l'élément de paroi (12, 13) et ensuite relier l'élément de paroi (12, 13) par l'élément de liaison (14) à l'autre zone (16) de l'élément de paroi (12, 13) ou avec la partie de pare-vent, et
- la partie de pare-vent (6) comportant un cadre (7) qui se fixe à la carrosserie (3) du véhicule (1) et ayant au moins une ouverture (8, 9) dans la zone de surface couverte par une paroi de plancher.

2. Pare-vent selon la revendication 1,
**caractérisé en ce que**
la partie de pare-vent (6) et/ou l'élément de paroi (12, 13) est ou sont réalisés au moins par zone par une partie de paroi élastique ou une partie de filet.

3. Pare-vent selon la revendication 1 ou 2,
**caractérisé en ce que**
l'élément de liaison (14) est une liaison à griffes ou à tirette.

4. Pare-vent selon les revendications 1 à 3,
**caractérisé en ce que**
la paroi de plancher est au moins par zone au moins sensiblement en matière élastique souple.

5. Pare-vent selon la revendication 4,
**caractérisé en ce que**
le cadre (7) est formé pour l'essentiel par une partie en matière plastique sensiblement horizontale dans la position de protection assurée par le pare-vent.

6. Pare-vent selon les revendications 1 à 5,
**caractérisé en ce que**
l'élément de paroi (12, 13) a une forme surfacique ou de filet et la zone de paroi est reliée de manière permanente à la partie de pare-vent (6).

7. Pare-vent selon les revendications 3 à 6,
**caractérisé en ce que**
la liaison à tirette (14) ou à griffes a un tracé courbe, convexe vers l'arrière dans la direction longitudinale (1) du véhicule.

8. Pare-vent selon les revendications 1 à 7,
**caractérisé**
**par** deux éléments de paroi (12, 13) installés à une distance latérale dans une position sensiblement symétrique par rapport au milieu du véhicule et qui, en combinaison avec la zone surfacique (10, 11) de la partie de pare-vent (6), constitue un compartiment pour au moins un objet et qui est accessible par une liaison à tirette (14) ou une liaison à griffes et se ferme avec les mêmes moyens.

9. Pare-vent selon l'une des revendications 1 à 8,
**caractérisé en ce que**
derrière ou entre les dossiers des sièges avant (2) il comporte un élément de pare-vent (17) installé en position de pare-vent sensiblement redressé et qui est relié de manière pivotante à la partie de pare-vent (6) installé sensiblement horizontalement, pour pouvoir pivoter autour d'un axe de pivotement (18) dans la direction transversale, celle du véhicule et être fixé en position de pare-vent par rapport à la partie de pare-vent (6) et/ou la carrosserie (3) du véhicule (1) .

10. Pare-vent selon la revendication 9,
**caractérisé en ce que**
l'élément de pare-vent (17) est au moins par zone, analogue à la partie de pare-vent et/ou comporte derrière une zone de surface sensiblement verticale en position de pare-vent, au moins un élément de paroi élastique par zone, et qui est relié au moins dans la zone périphérique de l'élément de paroi à une zone de surface de l'élément de pare-vent et dans au moins une autre zone périphérique de l'élément de paroi par une pièce de liaison, par exemple une liaison à griffes ou une liaison à tirette à la zone de surface de l'élément de pare-vent par une liaison amovible et au moins une zone de l'élément de pare-vent couverte par l'élément de paroi associé et/ou cet élément de paroi associé est/sont réalisé(s) au moins de façon sensiblement élastique.
